# EUROPEAN PATENT SPECIFICATION

(11) **EP 1 993 379 B1**
(45) Date of publication and mention of the grant of the patent: **15.12.2010**
(21) Application number: 07726647.6
(22) Date of filing: 06.03.2007
(51) Int. Cl.: A23L 1/015, A23L 1/217, A23L 1/164

(54) **FOOD PRODUCT COMPRISING A MIXTURE OF CALCIUM SALTS OR A CALCIUM DOUBLE SALT**
NAHRUNGSMITTEL UMFASSEND EINE MISCHUNG AUS CALCIUMSALZEN ODER EIN CALCIUM-DOPPELSALZ
PRODUIT ALIMENTAIRE COMPRENANT UN MÉLANGE DE SELS DE CALCIUM OU UN DOUBLE SEL DE CALCIUM

(30) Priority: 13.03.2006 EP 06111032
(43) Date of publication of application: 26.11.2008
(73) Proprietor: PURAC Biochem BV, 4206 AC Gorinchem (NL)
(72) Inventor: BROUWER, Johannes Theodorus, NL-2565 JV Den Haag (NL); BOERBOOM, Frank, NL-3702 BB Zeist (NL); BONTENBAL, Elize Willem, NL-6701 CE Wageningen (NL)
(74) Representative: Beetz, Tom
(86) International application number: PCT/EP2007/052080
(87) International publication number: WO 2007/104670

(56) References cited:
- WO-A-2004/075657
- WO-A-2005/034649
- US-A1- 2004 126 469

## Description

The invention pertains to a food product comprising a mixture of calcium chloride and calcium lactate to the use of said calcium salt mixture as additive in a food product and to the use thereof for preventing or inhibiting the formation of acrylamide in food.

The last years a wide variety of foods have been tested positive for the presence of acrylamide monomer. Acrylamide has especially been found in carbohydrate food products that have been processed at high temperatures.

Acrylamide is a potentially cancer-causing chemical, which is formed in many types of cooked foods. Although not exactly known for humans, acrylamide has a carcinogenic potency in rats that is similar to that of other carcinogens in food. Although further research is needed to assess what health effects, if any, may result from human consumption of acrylamide at the levels commonly found in such foods, many consumers have voiced concern.

Examples of foods that have tested positive for acrylamide include coffee, cereals, cookies, potato chips, crackers, french-fried potatoes, breads and rolls, and fried breaded meats. Accordingly, it is an object of many inventions to provide methods for reducing the level of acrylamide in foods.

In WO 2004/026042 and WO 2004/026043 the food is contacted with asparaginase and sugar to inactivate asparagine, which is believed to play a role in the acrylamide formation.

In WO 2004/032648 a similar process was disclosed. According to that invention, the formation of acrylamide during heat treatment of raw material comprising carbohydrate, protein and water is reduced by treating the raw material with an enzyme before the heat treatment. Accordingly, the method provides preparing a heat-treated product, comprising the sequential steps of providing a raw material which comprises carbohydrate, protein and water, and treating the raw material with an enzyme.

In WO 2004/075656 a process and apparatus for a method for reducing the amount of acrylamide in thermally processed foods is described. The method relies on the manipulation of various unit operations used in the production of food products, particularly the washing and cooking, unit operations. For example, the washing unit operation can be modified to provide a contacting step at an increased time and temperature, and adding components as calcium chloride and L-cysteine to an aqueous solution used for the contacting.

In WO 2005/034649, US 2004/0126469 and WO 2004/075657 is suggested to use multivalent ions, including calcium chloride or calcium lactate, for reducing acrylamide in food. However, it is not suggested to use a combination of calcium chloride and calcium lactate in particular molar ratios.

In GB 1079628 calcium lactate was used in a food product, but only as a stiffening agent to improve the physical appearance and plate life, not for preventing the formulation of acrylamide.

The above methods suffer from various disadvantages. Asparaginases are expensive enzymes and may affect other transformations as well. Special apparatuses and methods for thermally processing food cannot be used in household situations, and adding calcium chloride, although effective in preventing acrylamide formation, has unacceptable effects on the taste of the food, whereas adding calcium lactate insufficiently reduces acrylamide formation.

There is therefore a need to a method for preventing or at least inhibiting the formation of acrylamide in food products during heat processing.

To this end it was now found that an effective method preventing or inhibiting the formation of acrylamide in heat processed food products, without affecting the taste thereof negatively could be obtained by using a mixture of calcium lactate and calcium chloride.

The present invention provides a food product that is suitable for heat processing, which comprises a mixture of calcium chloride and calcium lactate characterized in that the concentration of calcium expressed as the number of millimoles calcium of calcium chloride to the number of millimoles calcium of calcium lactate per Kg dried ingredients of the food is in the area designated by the quadrangle defined by points (4.5:10.2), (17.5:6.8), (28.6:6.8), and (14:20.4).

According to the invention the food comprises a mixture of calcium lactate and calcium chloride. Surprisingly, this combination appears to be very effective and acceptable, although calcium lactate only is insufficiently active to reduce the acrylamide formation sufficiently, and calcium chloride alone in amounts to effectively reduce the acrylamide formation gives unacceptable sensory properties to the food product. Furthermore, such amounts of calcium chloride have a negative effect on fat content and expansion. The claimed area provides a combination of calcium chloride and calcium lactate to obtain a food product that has at least acceptable properties with regard to the combination of taste, expansion, fat/volume ratio, and reduction of formed acrylamide.

According to the invention the concentration of calcium is in the area designated by the quadrangle defined by points (4.5:10.2), (17.5:6.8), (28.6:6.8) and (14:20.4). The acrylamide formation in this embodiment is reduced with more than 30% of the amount that is obtained according to a process not using the instant combination.

Calcium chloride and calcium lactate have solubility better than 35 g/L (in water of 20 °C).

The invention further provides the use of said calcium lactate and calcium chloride mixture for preventing or inhibiting acrylamide formation in a food product during heat processing, and improving taste, expansion, and fat/volume ratio.

The food products that are particularly suitable for the present method are products based on fried potato, such as French fries, batters and coatings and potato chips in various forms. These food products can be made from potatoes, mashed potatoes, potato starch, and the like.

The invention is further illustrated by the following non-limitative examples.

Different calcium salts were added to a mixture of potato granules, potato starch, Paselli® P (potato fiber, ex Avebe, The Netherlands), salt and water in order to prepare snack pellets. The product was prepared by use of a single screw extruder and temperatures around the gelatinization temperature of potato starch. After one-week storage, the snack pellets were fried into snacks. The quality of these snacks was characterized by its sensory properties and acrylamide content. The moisture content of the snack pellets and of the final snacks was controlled and monitored. All snacks produced contained the same moisture content before frying. Also after frying the moisture contents of the samples was similar (2.1%).

It was found that addition up to about 35 mM/Kg (millimoles/Kg dried food) calcium by Puracal® (trade name for calcium lactate, ex Purac Biochem B.V., The Netherlands) resulted in the best sensory characteristics, which were comparable with two blanks. Addition of more calcium salts and in particular of more than 45 mM/Kg calcium by Puracal® resulted in a lower expansion ratio and worse taste than the blank. The preferred amount of calcium added by Puracal is less than 42 mM/Kg.

The amount of calcium added by calcium chloride should preferably at least 7 mM/Kg, more preferably more than 13.6 mM/Kg to sufficiently inhibit acrylamide formation. However, the amount should preferably below 40.8 mM/Kg, more preferably less than 22 mM/Kg to prevent bad taste of the product.

Table 1 describes the formula for production of basic snack pellets. The recipe contains 37% moisture. Puracal® PP and Gluconal® and CaCl₂ were added to the dry ingredients (potato granules + potato starch + Paselli® P + salt) in approximately equimolar ratios. The amount of calcium in the added weight was corrected by decreasing half of that weight of potato starch and half of that weight of potato granules. Table 1 Formula for standard sample snack pellets, 10 Kg ingredients in total

| | Blank (Kg) |
|---|---|
| Potato granules | 3.257 |
| Potato starch | 3.257 |
| Salt | 0.131 |
| Paselli P | 0.521 |
| Water | 2.835 |

Based on this recipe the following compositions were evaluated. The change made to the recipe to include these substances was to add the substances to the above base recipe and to adjust the water content to match the new dry matter content.

| | Composition of the samples of the study Concentration in mM/Kg | | | | | |
|---|---|---|---|---|---|---|
| | Comparison | | | | | According to invention |
| Composition | a | b | c | II | III | I |
| Calcium chloride | 0 | 13.6 | 0 | 36.7 | 9.0 | 9.0 |
| Calcium lactate | 0 | 0 | 70 | 13.3 | 36.3 | 11.5 |

Snack pellets were fried for 25 seconds at 190°C in a fryer in arachid oil. After cooling the products were evaluated by an expert panel of four persons on different attributes (color, appearance, texture, and flavor) of which only color and flavor were significantly different. These attributes were evaluated by calculating the averages of the different judgments for each person (Table 2). Subsequently, these data were related to the sensory judgments of the blank on all attributes and accordingly rated on a linear scale of 0 to 5 (0 very negative, 5 very positive), and expressed as values relative to the blank, which was defined as being 0. Negative values have a taste or color worse than the blank (Table 3).

**Table 2**

| Main attribute | Sub-attribute |
|---|---|
| Color | Pale |
| | Yellow |
| | Brown |
| | Heterogeneity |
| Flavor | Rancid/stale |
| | Bitter/burned |
| | Fat |
| | Acid |
| | Other abnormality |

The acrylamide content of a number of samples was analyzed according to an LC-MSMS method. The potato snack samples (Wokkels®) were extracted overnight in water-methanol (2:8 v/v). After centrifugation and freezing, the samples were cleaned (mixed-bed ion exchange) and measured by HPLC-triplequad mass spectrometry system (LC-MSMS). To quantify the acrylamide content, an internal standard (D₃-acrylamide) was added to all the samples before the extraction. The acrylamide ratio has been expressed in Table 3 relative to the blank which ratio was defined as 1.00.

Table 3 shows that the acrylamide content of the samples with calcium chloride and Puracal® were much lower than of the blank (> 30% decrease). The flavor was much improved by addition of the calcium lactate, and the combination of 9 mM/Kg of calcium chloride and 11.5 mM/Kg of calcium lactate was better with regard to taste than calcium chloride only, whereas the acrylamide ratio has the same decrease. Addition of singly calcium lactate does not give sufficient decrease of acrylamide ratio, although taste and color is excellent. Addition of calcium lactate to calcium chloride has an optimum. Addition of more calcium lactate than the optimum does not further decrease the acrylamide ratio, although the effect on taste is not detrimental.

**Table 3 Effect of addition of different calcium salts on acrylamide content and average brown color of fried snack.**

| Composition | Acrylamide ratio | Taste | Color |
|---|---|---|---|
| a (blank) | 1.00 | 0 | 0 |
| b | 0.65 | -0.19 | 0.89 |
| c | 0.72 | 0.68 | 1.14 |
| I | 0.65 | 0.43 | 0.51 |
| II | 0.17 | -0.94 | 0.89 |
| III | 0.65 | 0.06 | -0.49 |

The numbers of Table 3 are the results from the trials. Indicated are the compositions tested, the acrylamide expressed as the ratio of the acrylamide level of the blank, and mean scores of taste and color as determined by the sensory panel relative to the blank.

## Claims

1. A food product suitable for heat processing, comprising a mixture of calcium chloride and calcium lactate, **characterized in that** the concentration of calcium expressed as the number of millimoles calcium of calcium chloride to the number of millimoles calcium of calcium lactate per Kg dried ingredients of the food is in the area designated by the quadrangle defined by points (4.5:10.2), (17.5:6.8), (28.6:6.8), and (14:20.4).

2. The food product of claim 1, which product is based on fried potato.

3. The food product of claim 2, which is French fries, potato chips, or potato snacks, bakery products or coatings, batters, and breadings for food products.

4. Use of a mixture of calcium chloride and calcium lactate for preventing or inhibiting acrylamide formation in a food product during heat processing thereof, **characterized in that** the concentration of calcium expressed as the number of millimoles calcium of calcium chloride to the number of millimoles calcium of calcium lactate per Kg dried ingredients of the food is in the area designated by the quadrangle defined by points (4.5:10.2), (17.5:6.8), (28.6:6.8), and (14:20.4).

## Patentansprüche

1. Nahrungsmittelprodukt, das für eine Heißverarbeitung geeignet ist, mit einer Mischung aus Kalziumchlorid und Kalziumlaktat, **dadurch gekennzeichnet, dass** die Kalziumkonzentration, ausgedrückt in Millimol Kalzium des Kalziumchlorids zu Millimol Kalzium des Kalziumlaktats pro 1 kg getrockneter Inhaltsstoffe des Nahrungsmittels, innerhalb eines Bereichs liegt, der durch ein durch die Punkte (4,5:10,2), (17,5:6,8), (28,6:6,8) und (14:20,4) definiertes Viereck spezifiziert ist.

2. Nahrungsmittelprodukt nach Anspruch 1, wobei das Produkt auf gerösteten Kartoffeln basiert.

3. Nahrungsmittelprodukt nach Anspruch 2, wobei das Nahrungsmittelprodukt Pommes frittes, Kartoffelchips oder Kartoffelsnacks sind oder ein Bäckereierzeugnis ist oder eine Beschichtung, ein Teig oder eine Panade für ein Nahrungsmittelprodukt ist.

4. Verwendung einer Mischung aus Kalziumchlorid und Kalziumlaktat zum Verhindern oder Unterdrücken der Ausbildung von Acrylamid in einem Nahrungsmittelprodukt während seiner Heißverarbeitung, **dadurch gekennzeichnet, dass** die Kalziumkonzentration, ausgedrückt in Millimol Kalzium des Kalziumchlorids zu Millimol Kalzium des Kalziumlaktats pro 1 kg getrockneter Inhaltsstoffe des Nahrungsmittels, innerhalb eines Bereichs liegt, der durch ein durch die Punkte (4,5:10,2), (17,5:6,8), (28,6:6,8) und (14:20,4) definiertes Viereck spezifiziert ist.

## Revendications

1. Produit alimentaire approprié pour un traitement thermique, comprenant un mélange de chlorure de calcium et de lactate de calcium, **caractérisé en ce que** la concentration de calcium, exprimée en nombre de millimoles de calcium du chlorure de calcium au nombre de millimoles de calcium du lactate de calcium par kg d'ingrédients anhydres de l'aliment est dans la zone désignée par le quadrangle défini par les points (4,5:10,2), (17,5:6,8), (26,6:6,8) et (14:20,4).

2. Produit alimentaire selon la revendication 1, lequel produit est à base de pomme de terre fritte.

3. Produit alimentaire selon la revendication 2, qui est des frittes, des chips ou des amuse-gueules à base de pomme de terre, des produits de boulangerie ou des garnitures, des pâtes et des chapelures pour des produits alimentaires.

4. Utilisation d'un mélange de chlorure de calcium et de lactate de calcium pour la prévention ou l'inhibition de la formation d'acrylamide dans un produit alimentaire pendant son traitement thermique, **caractérisée en ce que** la concentration du calcium exprimée en nombre de millimoles de calcium du chlorure de calcium au nombre de millimoles de calcium du lactate de calcium par kg d'ingrédients anhydres de l'aliment est dans la zone désignée par le quadrangle défini par les points (4,5:10,2), (17,5:6,8), (26,6:6,8) et (14:20,4).
